# DEMANDE DE BREVET EUROPEEN

(11) **EP 3 179 157 A1**
(43) Date de publication de la demande: **14.06.2017**
(21) Numéro de dépôt: 16202045.7
(22) Date de dépôt: 02.12.2016
(51) Int. Cl.: F21S 8/10, G02B 19/00

(54) **ELEMENT OPTIQUE TRANSPARENT AVEC FACETTES DE RENVOI POUR DUPLICATION D'IMAGE**

(30) Priorité: 07.12.2015 FR 1561909
(71) Demandeur: VALEO VISION, 93012 Bobigny Cedex (FR)
(72) Inventeur: GIRAUD, Sylvain, 72200 LA FLECHE (FR); TRIPON, Laurent, 49150 Baugé en Anjou (FR); FLOCH, Lionel, 49100 ANGERS (FR); GUEROULT, Nicolas, 49000 ANGERS (FR)

(57) **Abrégé**

L'invention a trait à un élément optique (8) en matériau transparent ou translucide apte à transmettre des rayons lumineux suivant un axe optique (10) et comprenant une portion d'entrée (8¹) des rayons lumineux, une portion de sortie (8²) des rayons lumineux, remarquable en ce que la portion de sortie (8²) comprend au moins une première facette (12, 16) inclinée par rapport à l'axe optique (10) et apte à réfléchir des rayons lumineux transversalement audit axe, et au moins une deuxième facette (14, 18) inclinée par rapport à l'axe optique (10) et positionnée transversalement à la ou au moins une des premières facettes inclinées (12, 16), de manière à réfléchir les rayons provenant de ladite ou desdites premières facettes (12, 16) vers la sortie de l'élément. L'invention a trait également à un module lumineux comprenant un tel élément optique (8).

## Description

L'invention a trait au domaine de l'éclairage et de la signalisation lumineuse, notamment pour véhicule automobile. Plus particulièrement, l'invention a trait à un élément optique transparent ou translucide apte à transmettre un faisceau lumineux.

Il est connu d'utiliser un guide de lumière pour réaliser un élément lumineux, notamment pour assurer une fonction de signalisation dans un feu de véhicule automobile. Par guide de lumière ou guide optique, on entend une pièce transparente ou translucide à l'intérieur de laquelle des rayons lumineux se propagent de manière contrôlée depuis une des extrémités du guide, appelée face d'entrée jusqu'à au moins une face de sortie. La propagation de manière contrôlée s'effectue généralement par des réflexions internes sur diverses faces, appelées faces de réflexion interne ou dioptre de guidage. Les rayons émis par une ou plusieurs sources lumineuses et entrant dans un guide de lumière peuvent être sujets à collimation au niveau de la face d'entrée, auquel cas ils se propagent essentiellement sans réflexions internes. L'image du faisceau produit, visible depuis l'extérieur, correspond essentiellement à une illumination de la face de sortie. Or dans certaines configurations, il peut être désirable d'étendre la face de sortie illuminée ou encore produire plusieurs faisceaux depuis une même face de sortie.

L'invention a pour objectif de proposer une solution palliant au moins un problème de l'art antérieur, plus particulièrement de l'art antérieur susmentionné. Plus spécifiquement, l'invention a pour objet de procurer davantage de flexibilité au niveau de la face de sortie d'un élément optique transparent ou translucide.

L'invention a pour objet un élément optique en matériau transparent ou translucide apte à transmettre des rayons lumineux suivant un axe optique et comprenant une portion d'entrée des rayons lumineux ; une portion de sortie des rayons lumineux ; remarquable en ce que la portion de sortie comprend au moins une première facette inclinée par rapport à l'axe optique et apte à réfléchir des rayons lumineux transversalement audit axe ; et au moins une deuxième facette inclinée par rapport à l'axe optique et positionnée transversalement à la ou au moins une des premières facettes inclinées, de manière à réfléchir les rayons provenant de ladite ou desdites premières facettes vers la sortie de l'élément.

La ou les premières et deuxièmes facettes inclinées sont avantageusement dépourvues de revêtement réfléchissant. Elles sont inclinées de manière à provoquer une réflexion totale des rayons lumineux.

Selon un mode avantageux de l'invention, la ou les premières facettes inclinées et/ou la ou les deuxièmes facettes inclinées de la portion de sortie forment un angle avec l'axe optique qui est compris entre 30° et 60°, préférentiellement entre 35° et 55°, plus préférentiellement entre 40° et 50°, notamment sensiblement égal à 45°. Ces valeurs s'entendent pour une mesure de l'angle dans le sens horloger ainsi que dans le sens anti-horloger.

Selon un mode avantageux de l'invention, la ou chacune des deuxièmes facettes inclinées est située en face, respectivement, de la ou spécifiquement d'une des premières facettes inclinées, suivant une direction perpendiculaire à l'axe optique, formant, respectivement, une ou plusieurs paires de première et deuxième facettes. Le cas échéant, les première et deuxième facettes de chaque paire sont associées l'une à l'autre de façon bijective.

Selon un mode avantageux de l'invention, les première et deuxième facettes de la ou de chacune des paires de première et deuxième facettes sont parallèles. Le cas échéant, les première et deuxième facettes de chaque parie sont ainsi inclinées d'un même angle par rapport à l'axe optique.

Selon un mode avantageux de l'invention, la portion de sortie comprend un profil formant deux surfaces inférieure et supérieure concourantes en un bord avant de l'élément, la ou au moins une des premières facettes étant sur une desdites surfaces et la ou au moins une des deuxièmes facettes étant sur l'autre desdites surfaces. Le profil en question peut présenter une forme de V faisant saillie dans la direction de l'axe optique.

Selon un mode avantageux de l'invention, l'axe optique passe par le bord avant de la portion de sortie.

Selon un mode avantageux de l'invention, la portion de sortie comprend plusieurs premières facettes inclinées et plusieurs deuxièmes facettes inclinées, chacune desdites deuxièmes facettes étant positionnée de manière à réfléchir les rayons lumineux provenant spécifiquement d'une des premières facettes. L'élément optique peut comporter plusieurs paires de première et deuxième facettes. Les première et deuxième facettes peuvent toutes être de même dimension.

Selon un mode avantageux de l'invention, l'une des deux surfaces concourantes comprend en outre au moins une des deuxièmes facettes et l'autre desdites surfaces comprend au moins une des premières facettes. La surface inférieure peut comporter au moins une première facette d'une première paire et une deuxième facette d'une deuxième paire et la surface supérieure peut comporter au moins la deuxième facette de la première paire et la première facette de la deuxième paire. Avantageusement, les premières facettes de l'une des surfaces sont inclinées par rapport à l'axe optique d'un angle dont la valeur est l'opposé de celle de l'angle duquel sont inclinées les deuxièmes facettes de cette surface par rapport audit axe optique.

Selon un mode avantageux de l'invention, la portion de sortie comprend également au moins une facette transversale à l'axe optique apte à transmettre des rayons lumineux provenant directement de la portion d'entrée et/ou des rayons lumineux réfléchis par la ou les deuxièmes facettes inclinées. Avantageusement, ladite facette transversale peut s'étendre sur une hauteur, mesurée perpendiculairement à l'axe optique, supérieure à celle de ladite deuxième facette. Avantageusement encore, la ou les facettes transversales peuvent être pourvues de motifs optiques de diffusion

Selon un mode avantageux de l'invention, la ou les facettes transversales de la face de sortie forment un angle avec l'axe optique qui est compris entre 75° et 105°, préférentiellement entre 80° et 100°, plus préférentiellement entre 85° et 95°, notamment sensiblement égal à 90°.

Selon un mode avantageux de l'invention, les surfaces inférieure et supérieure concourantes comportent chacune la ou au moins une des facettes transversales. Selon un mode avantageux de l'invention, les surfaces inférieure et supérieure concourantes comportent chacune une facette longitudinale. On entend par facette longitudinale une facette s'étendant sensiblement le long de l'axe optique.

Selon un mode avantageux de l'invention, la portion de sortie est formée par une suite de motifs élémentaires de sortie le long de l'axe optique, chaque motif élémentaire étant formé, au niveau de la surface inférieure concourante, par la succession d'une première facette inclinée d'une première paire, d'une facette longitudinale, d'une deuxième facette inclinée d'une deuxième paire et d'une facette transversale et, au niveau de la surface supérieure, par la succession de la deuxième facette inclinée de la première paire, d'une facette longitudinale, d'une facette transversale et de la première facette inclinée de la deuxième paire. Avantageusement, deux facettes successives dans un motif élémentaire peuvent être jointives. En outre, deux motifs successifs peuvent être jointifs, à savoir que les facettes inclinées de la deuxième paire d'un motif peuvent être jointives avec les facettes inclinées de la première paire du motif suivant.

Selon un mode avantageux de l'invention, les première(s) et deuxième(s) facettes inclinées sont allongées perpendiculairement à l'axe optique.

Selon un mode avantageux de l'invention, les première(s) et deuxième(s) facettes inclinées forment des rainures transversales sur les deux surfaces concourantes de la portion de sortie.

Selon un mode avantageux de l'invention, les première(s) et deuxième(s) facettes inclinées sont disposées de manière à ce que des rayons lumineux incidents sur une partie seulement de la portion d'entrée, ladite partie correspondant préférentiellement à moins de 70%, plus préférentiellement moins de 60%, de ladite face, sortent par la totalité de la portion de sortie.

Selon un mode avantageux de l'invention, la portion de sortie comprend plusieurs premières facettes inclinées avec un premier groupe desdites facettes situé en face d'une première portion de la portion d'entrée et un deuxième groupe desdites facettes situé en face d'une deuxième portion de ladite portion d'entrée.

Selon un mode avantageux de l'invention, la portion de sortie comprend plusieurs deuxièmes facettes inclinées avec un premier groupe desdites facettes coopérant avec le premier groupe des premières facettes et situé en face de la deuxième portion de la portion d'entrée, et un deuxième groupe des deuxièmes facettes coopérant avec le deuxième groupe des premières facettes et situé en face de la première portion de la portion d'entrée.

Selon un mode avantageux de l'invention, la portion d'entrée comporte une face d'entrée généralement plane et perpendiculaire à l'axe optique.

Selon un mode avantageux de l'invention, la portion d'entrée comporte une face concave qui comprend éventuellement plusieurs facettes généralement perpendiculaires à l'axe optique. Le cas échéant, la portion d'entrée peut comporter un profil avec des marches.

Selon un mode avantageux de l'invention, la portion d'entrée comporte un organe d'entrée de lumière présentant une face d'entrée de lumière, et s'étendant de cette face d'entrée de lumière jusqu'à la portion de sortie. Le cas échéant, l'organe d'entrée peut être un collimateur. Avantageusement, l'élément optique peut être réalisé monobloc et de même matière.

Selon un mode avantageux de l'invention, l'organe d'entrée s'étend sensiblement perpendiculairement à l'axe optique et est pourvu d'une facette de renvoi inclinée par rapport à l'axe optique, par exemple d'un angle sensiblement égal 45°.

Selon un mode avantageux de l'invention, l'organe d'entrée s'étend sensiblement le long de l'axe optique.

Selon un mode avantageux de l'invention, la portion d'entrée comporte en outre une autre face d'entrée disposée au droit de l'organe d'entrée de lumière.

En variante, la portion d'entrée peut comporter un autre organe d'entrée.

Selon un mode avantageux de l'invention, l'élément optique s'étend transversalement à l'axe optique suivant un profil courbe, la portion avant et/ou la portion arrière formant des échelons le long dudit profil.

L'invention a également pour objet un module optique comprenant une première source de lumière apte à émettre des rayons lumineux ; et un élément optique disposé de sorte à pouvoir recevoir des rayons lumineux émis par la source de lumière ; remarquable en ce que l'élément optique est conforme à l'invention.

Selon un mode avantageux de l'invention, le module optique comporte un organe optique avec une face d'entrée et une face de sortie, l'élément optique étant disposé devant ladite face de sortie de l'organe optique et étant apte à propager des rayons lumineux émis par la première source de lumière de sa face d'entrée vers sa face de sortie.

Selon un mode avantageux de l'invention, l'organe optique est un premier organe optique disposé pour éclairer une partie seulement de la portion d'entrée de l'élément optique, ledit module comprenant une deuxième source de lumière et un deuxième organe optique, préférentiellement superposé au premier organe optique, disposé pour éclairer une autre partie seulement de la portion d'entrée de l'élément optique. Le cas échéant, le premier organe optique peut être agencé pour que la partie de la portion d'entrée qu'il éclaire soit en vis-à-vis avec la surface supérieure concourante qui lui est ainsi associée tandis que le deuxième organe optique est agencé pour que la partie de la portion d'entrée qu'il éclaire soit en vis-à-vis avec la surface inférieure concourante qui lui est ainsi associée. Le cas échéant, chaque organe optique est de préférence un collimateur agencé pour collimater les rayons lumineux qu'il reçoit de sorte à diriger ces rayons vers les premières facettes inclinées de la surface concourante qui lui est associée. En variante, les organes optiques peuvent être des guides de lumière.

Selon un mode avantageux de l'invention, le module optique comporte en outre une deuxième source de lumière disposée en face de la face d'entrée de l'organe d'entrée de lumière tandis que la face de sortie de l'organe optique est disposée devant ladite autre face d'entrée de l'élément optique.

Selon un mode avantageux de l'invention, les première et deuxième sources de lumière éclairent dans des couleurs différentes.

Avantageusement, la première source de lumière peut émettre des rayons lumineux de couleur blanche, par exemple pour participer à la réalisation d'un faisceau réglementaire de type feu diurne et/ou de feu de position. La deuxième source de lumière peut émettre des rayons lumineux de couleur ambre, par exemple pour participer à la réalisation d'un indicateur de direction. Le cas échéant, les première et deuxième sources de lumière peuvent être disposées sur un support commun, par exemple une carte de circuit imprimé. Toujours avantageusement, le module est configuré que la première source de lumière soit éteinte lorsque la deuxième est allumée et inversement.

L'invention est intéressante en ce qu'elle permet de décaler latéralement au moins une partie des rayons lumineux reçus par l'élément optique. Ce décalage permet de déplacer et/ou d'augmenter l'étendue de la face par laquelle les rayons lumineux sortent. Il permet également de mélanger des rayons lumineux d'origines distinctes, comme notamment de couleurs différentes.

D'autres caractéristiques et avantages de la présente invention seront mieux compris à l'aide de la description et des dessins parmi lesquels :
- La figure 1 est une vue en perspective d'un module lumineux comprenant un élément optique duplicateur d'image selon un premier mode de réalisation de l'invention ;
- La figure 2 est une vue en coupe schématique de l'élément optique ;
- La figure 3 est une vue en perspective d'une première application de l'élément optique illustré aux figures 1 et 2 ;
- La figure 4 est une vue en perspective d'une deuxième application de l'élément optique illustré aux figures 1 et 2 ;
- La figure 5 est une vue en perspective d'une troisième application de l'élément optique illustré aux figures 1 et 2 ;
- La figure 6 est une vue en coupe schématique d'un élément optique selon un quatrième mode de réalisation de l'invention.

Dans la description qui va suivre, les termes employés tels que « horizontal », « vertical », « haut », « bas », « supérieur(e) », « inférieur(e) », « avant » et « arrière » par exemple, décrivant les positions des différents éléments ne sont pas à interpréter d'une manière absolue mais bien relative, décrivant ainsi les positions des éléments par rapport à leur disposition sur les figures. Les dispositifs d'éclairage décrits pourraient être montés dans d'autres positions et/ou pour d'autres applications.

De plus, les positions relatives des différents éléments optiques tels que les sources lumineuses, les éléments optiques et les lentilles exprimées pour la simplicité de compréhension par alignement des axes optiques et/ou correspondance des foyers respectifs ne sont pas à interpréter de manière exacte dans la mesure où de légères variations sont envisageables voire souhaitables en vue, entre autres, de corriger le caractère non parfait et certaines aberrations optiques des éléments optiques ou d'obtenir certains effets supplémentaires.

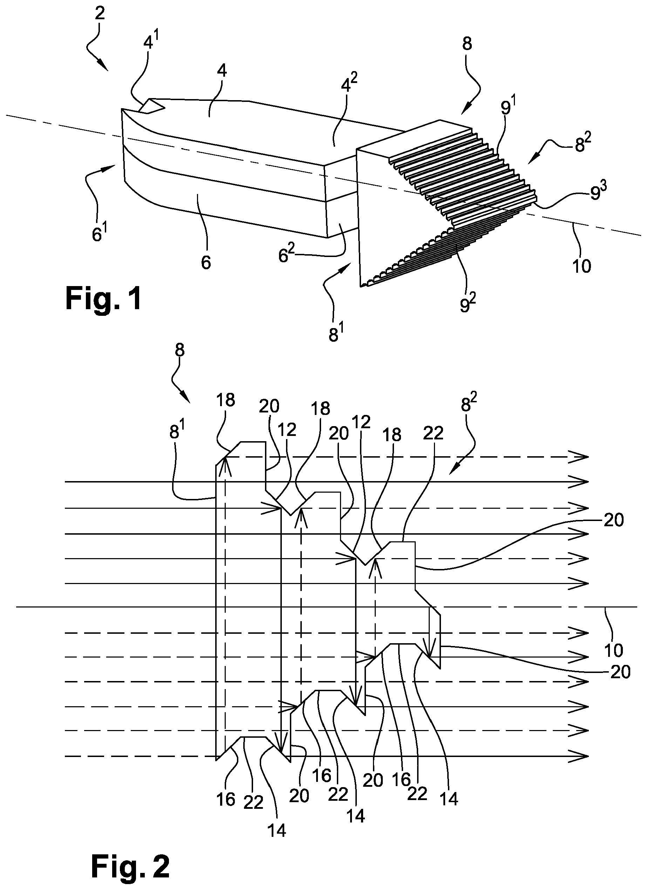

La figure 1 illustre en perspective un module lumineux selon un premier mode de réalisation de l'invention. Le module lumineux 2 comprend un premier organe optique sous forme de guide de lumière 4 généralement rectiligne, avec une face d'entrée 4¹ de la lumière produite par une ou plusieurs sources lumineuses (non représentées) et une face de sortie 4². Les rayons se propageant dans la matière transparente ou translucide du guide 4 sont réfléchis par le principe de la réflexion totale sur les parois latérales du guide. La face d'entrée 4¹ peut être configurée en collimateur afin de canaliser les rayons dans l'axe longitudinal du guide 4. Le module 2 comprend également un deuxième organe optique, à savoir un deuxième guide de lumière 6 similaire au premier 4 et superposé à ce dernier. Il comprend également une face d'entrée 6¹ de la lumière produite par une ou plusieurs sources lumineuses (non représentées) et une face de sortie 6².

Le premier guide de lumière 4 peut être teinté, par exemple en couleur dite « ambre » afin de colorer en jaune/orange la lumière le traversant, notamment lorsque l'on désire assurer une fonction d'indicateur de direction, couramment désignée « clignotant ».

Le module 2 comprend également un élément optique 8 apte à transmettre les rayons lumineux provenant des faces de sorties 4² et 6² des premier et deuxième guides 4 et 6, respectivement. L'élément optique est en matériau transparent ou translucide, comme par exemple du polycarbonate (PC) ou du verre et comprend une portion d'entrée 8¹ disposée en vis-à-vis des faces de sortie 4² et 6² des premier et deuxième guides 4 et 6, respectivement. Il comprend également une portion de sortie 8² de profil transversal en V et comprenant sur chacune de ses deux surfaces principales 9¹ et 9² formant le V des facettes inclinées de réflexion. Ces dernières sont destinées à réfléchir essentiellement verticalement des rayons lumineux se propageant essentiellement horizontalement depuis la portion d'entrée 8¹, et ce vers des facettes de la surface principale opposée pour être ensuite à nouveau réfléchis vers l'avant essentiellement suivant l'axe optique 10 du module 2. Plus particulièrement, les rayons émis par le premier guide 4 rencontrent, essentiellement, la surface principale supérieure 9¹ de la portion de sortie 8² de l'élément 8. Une partie de ces rayons rencontrent les facettes inclinées et sont réfléchis verticalement vers le bas en direction de la surface principale inférieure 9². Ces rayons, lorsqu'ils rencontrent les facettes inclinées correspondant à celles de la surface principale du haut sont alors réfléchis vers l'avant et sortent de l'élément au niveau de la portion inférieure de la portion de sortie 8². Cela signifie que la totalité de la portion de sortie 8² est éclairée alors que seulement une partie supérieure de la portion d'entrée 8¹ est éclairée. Similairement, les rayons émis par le deuxième guide 6 sont partiellement réfléchis vers le haut par les facettes inclinées de la surface principale inférieure 9² de la portion de sortie 8². Ces rayons sont alors à nouveau réfléchis sur la surface principale supérieure pour ensuite sortir de l'élément au niveau de la portion supérieure de la portion de sortie 8². L'autre partie des rayons émis par le deuxième guide 6 traversent l'élément et en sortent au niveau de la portion inférieure de la portion de sortie 8². La totalité de la portion de sortie 8² est ainsi éclairée.

La construction et le principe de fonctionnement de l'élément optique 8 vont être décrits en détail en relation avec la figure 2. La figure 2 est une représentation schématique en coupe longitudinale de l'élément optique 8 du module de la figure 1.

On peut observer à la figure 2 le profil des deux surfaces principales 9¹ et 9² formant le V de la portion de sortie 8² de l'élément 8. La surface principale supérieure 9¹ comprend des premières facettes inclinées 12 aptes à réfléchir une partie des rayons provenant de la partie supérieure de la portion d'entrée 8¹. Ces rayons sont représentés en trait continu. Les premières facettes inclinées 12 forment préférentiellement un angle de 45° avec l'axe optique, de manière à ce que les rayons incidents à ces facettes 12 le soient avec un angle d'incidence de l'ordre de 45°. Cet angle est supérieur à l'angle limite de réfraction qui est, par application du principe de Snell-Decartes, égal à *arcsin(n₂*/*n₁)*, où *n₁* est l'indice de réfraction du matériau de l'élément optique 8 et *n₂* est l'indice de réfraction de l'air ambiant. Pour un matériau transparent constitué de polycarbonate (PC) d'indice de réfraction de 1.591, l'angle limite de réfraction est de l'ordre de 39°. Les rayons incidents selon un angle d'incidence supérieur à 39° vont alors subir une réflexion totale. En fonction du choix du matériau de l'élément optique 8, l'angle d'inclinaison des facettes pourra varier quelque peu pour autant qu'il assure toujours une réflexion totale des rayons.

Les rayons réfléchis par les premières facettes inclinées 12 sont orientés essentiellement perpendiculairement à l'axe optique 10 pour rencontrer des deuxièmes facettes inclinées 14. Ces dernières sont également inclinées avantageusement d'un angle de 45° afin d'assurer une réflexion totale des rayons vers l'avant de l'élément optique 8, essentiellement parallèlement à son axe optique 10. Ces rayons (représentés en trait continus) sortent de l'élément optique 8 au travers de facettes transversales 20. En l'occurrence, ces facettes sont essentiellement perpendiculaires à l'axe optique 10.

Contrairement aux rayons réfléchis doublement selon le principe décrit ci-avant, le reste des rayons provenant de la partie supérieure de la portion d'entrée 8¹, c'est-à-dire les rayons non réfléchis par les premières facettes 12, rencontrent des facettes transversales 20 sur la surface principale supérieure de la portion de sortie 8², sans subir de déviation substantielle.

Par voie de conséquence, les rayons rentrant dans l'élément optique 8 par la partie supérieure de la portion d'entrée 8¹ sortent par la totalité de la portion de sortie 8².

Similairement, une partie des rayons entrant dans l'élément optique 8 par la partie inférieure de la portion d'entrée 8¹ (représentés en trait interrompu) rencontrent des premières facettes inclinées 16 (cette fois-ci sur la surface principale inférieure de la portion de sortie 8²) pour y subir une première réflexion totale. Ces rayons réfléchis rencontrent alors des deuxièmes facettes inclinées 18 (cette fois-ci sur la surface principale supérieure de la portion de sortie 8²) pour y subir une deuxième réflexion totale et sortir de l'élément essentiellement parallèlement à l'axe optique 10. Le reste des rayons entrant dans l'élément optique 8 par la partie inférieure de la portion d'entrée 8¹ rencontrent des facettes transversales 20 sur la surface principale inférieure de la portion de sortie 8², sans subir de déviation substantielle.

Par voie de conséquence, les rayons rentrant dans l'élément optique 8 par la partie inférieure de la portion d'entrée 8¹ sortent par la totalité de la portion de sortie 8².

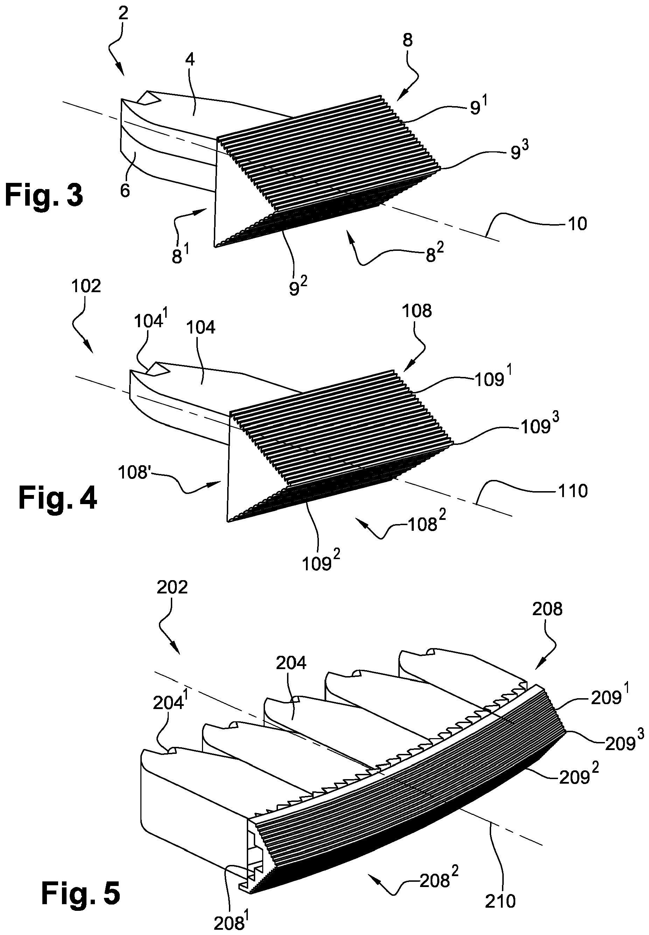

La figure 3 est une illustration en perspective d'un module lumineux selon un premier mode de réalisation, similaire à celui de la figure 1. Le module 2 comprend deux éléments lumineux superposés 4 et 6, les faces de sortie de chacun desdits éléments étant disposées en face de la portion d'entrée de l'élément optique 8. Le fait d'allumer un seul des deux éléments lumineux provoque un faisceau lumineux sortant de la totalité de la portion de sortie de l'élément 8. Le fait d'allumer les deux éléments lumineux provoque un faisceau lumineux sortant également de la totalité de la portion de sortie de l'élément 8 mais d'une intensité supérieure, en l'occurrence doublement supérieure pour autant que les puissances lumineuses des deux éléments 4 et 6 soient essentiellement égales. Alternativement, les sources lumineuses de deux éléments lumineux peuvent n'être allumées que de manière sélective, c'est-à-dire soit celle(s) du premier élément 4, soit celle(s) du deuxième élément 6. Dans ce cas, la lumière produite par un des éléments pourra être colorée et permettre de produire, au choix, des images lumineuses essentiellement identique mais de couleurs différentes.

La figure 4 est une illustration en perspective d'un module lumineux selon un deuxième mode de réalisation. Les numéros de référence du premier mode de réalisation sont utilisés pour les mêmes éléments ou éléments correspondants, ces numéros étant toutefois majorés de 100. Le module 102 se distingue du module 2 de la figure 3 en ce qu'il ne comprend qu'un seul élément lumineux 104. L'élément optique 108 peut en effet avoir pour seule fonction, ou du moins pour fonction principale, de produire une image plus grande au niveau de la portion de sortie du module.

La figure 5 est une illustration en perspective d'un module lumineux selon un troisième mode de réalisation. Similairement, les numéros de référence du premier mode de réalisation sont utilisés pour les mêmes éléments ou éléments correspondants, ces numéros étant toutefois majorés de 200. Le module 202 se distingue des modules 2 et 102 des figures 3 et 4 en ce qu'il comprend plusieurs éléments lumineux 204 disposés côte à côte, et en ce que l'élément optique 208 s'étend transversalement à l'axe optique le long des portions de sortie 204² des éléments lumineux 204. En l'occurrence, l'élément optique 208 s'étend transversalement suivant un profil courbe, étant entendu que ce profil peut varier, c'est-à-dire prendre une autre courbure ou encore être essentiellement rectiligne.

Pour prendre un profil courbe, les facettes décrites précédemment en relation avec la figure 2 peuvent rester planes et former le long de l'étendue de l'élément 208 des échelons compensant la courbure, comme cela est visible sur la représentation de la portion de sortie 208² à la figure 5.

La portion d'entrée 208¹ de l'élément optique 208 peut ne pas être plane. En effet, comme cela est visible à la figure 5, elle peut prendre une forme concave en comprenant plusieurs facettes généralement planes et perpendiculaires à l'axe optique. Etant donné que les rayons lumineux provenant des guides de lumière 204 sont essentiellement parallèles à l'axe optique et donc perpendiculaires auxdites facettes, ils ne subissent essentiellement aucune réfraction, si bien que le fait de parcourir une lame d'air d'épaisseur variable en fonction de leur hauteur n'a pas d'impact sur leur parcours. Le fait de prévoir une forme concave à la portion d'entrée 208¹ de l'élément optique 208 permet de s'acquitter de certaines contraintes liées à la réalisation de l'élément par injection de matière plastique. En effet, cette mesure permet de limiter les variations importantes d'épaisseur le long de la section de l'élément. Grâce à la portion d'entrée concave, l'épaisseur de l'élément est essentiellement constante le long du profil de sa section, ce qui évite la formation de retassures lors de l'injection de la matière plastique le constituant. Les retassures dans le domaine de l'injection de matière plastique sont des défauts de surface caractérisés par un affaissement de la matière, liés essentiellement à un retrait inhomogène de matière lors du refroidissement.

Il est à noter que, similairement à la portion de sortie 208², la portion d'entrée 208¹ peut également comprendre des facettes formant des échelons le long de l'étendue de l'élément 208, afin de compenser la courbure dudit élément. Ces facettes sont alors avantageusement planes et perpendiculaires à l'axe optique.

Comme cela est également visible à la figure 5, similairement aux portions d'entrée 208¹ et de sortie 208² de l'élément optique 208, les faces de sortie 204² des éléments lumineux 204 peuvent également comprendre des facettes formant des échelons le long de l'étendue de l'élément 208, et ce afin de compenser la courbure dudit élément. Ces facettes sont alors avantageusement planes et perpendiculaires à l'axe optique.

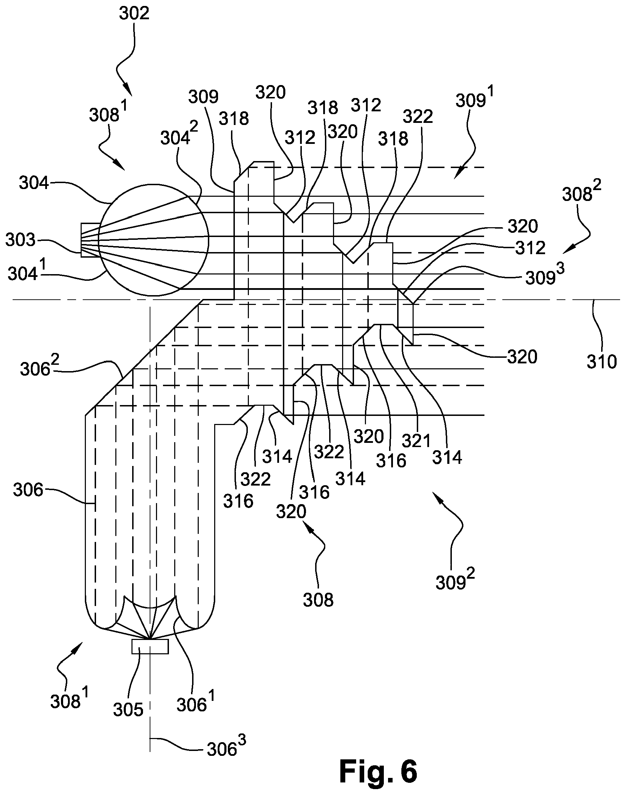

La figure 6 est une vue en coupe d'un module lumineux et d'un élément optique selon un quatrième mode de réalisation de l'invention. Les numéros de référence du premier mode de réalisation aux figures 1 et 2 sont utilisés pour les mêmes éléments ou éléments correspondants, ces numéros étant toutefois majorés de 300.

Le module lumineux 302 comprend, essentiellement, l'élément optique 308, une première source lumineuse 303, un organe optique 304 et une deuxième source lumineuse 305.

La portion d'entrée 308¹ de l'élément optique 308 comprend un organe d'entrée 306, préférentiellement d'un seul tenant avec le reste de l'élément optique. L'organe d'entrée 306 comprend une face d'entrée 306¹ en face de laquelle est disposée la source lumineuse 305, et une facette de réflexion 306². Comme cela est visible à la figure 6, l'organe d'entrée 306 s'étend suivant un axe principal 306³ qui est transversal, préférentiellement perpendiculaire, à l'axe optique 310 de l'élément optique 308. Les rayons lumineux émis par la source lumineuse 305 rentrent dans l'organe d'entrée 306 par la face d'entrée 306¹. Cette dernière peut être configurée comme un collimateur, de manière à ce que les rayons se propagent essentiellement parallèlement à l'axe principal 306³ de l'organe d'entrée 306. Ces rayons sont ensuite réfléchis par la surface de réflexion 306² vers les facettes transversales 320 et les premières facettes inclinées 316. Ces rayons sont représentés en traits interrompus.

La portion d'entrée 308¹ comprend également une face d'entrée 309 des rayons émis par l'organe optique 304. Ces rayons rencontrent alors les facettes transversales 320 et les premières facettes inclinées 312. Ils sont représentés en traits continus.

Le parcours des rayons au travers des facettes transversales 320 et en réflexion sur les premières et deuxièmes facettes inclinées 312/316 et 314/318 est similaire à celui du premier mode de réalisation à la figure 2. Il est par ailleurs fait référence à la description de cette figure.

## Revendications

1. Elément optique (8 ; 108 ; 208 ; 308) en matériau transparent ou translucide apte à transmettre des rayons lumineux suivant un axe optique (10 ; 110 ; 210 ; 310) et comprenant :
- une portion d'entrée (8¹ ; 108¹ ; 208¹ ; 308¹) des rayons lumineux ;
- une portion de sortie (8² ; 108² ; 208² ; 308²) des rayons lumineux ; **caractérisé en ce que**
la portion de sortie (8² ; 108² ; 208²; 308²) comprend :
- au moins une première facette (12, 16 ; 312, 316) inclinée par rapport à l'axe optique (10; 310) et apte à réfléchir des rayons lumineux transversalement audit axe ; et
- au moins une deuxième facette (14, 18 ; 314, 318) inclinée par rapport à l'axe optique (10 ; 310) et positionnée transversalement à la ou au moins une des premières facettes inclinées (12, 16 ; 312, 316), de manière à réfléchir les rayons provenant de ladite ou desdites premières facettes (12, 16 ; 312, 316) vers la sortie de l'élément.

2. Elément optique (8 ; 108 ; 208 ; 308) selon la revendication 1, **caractérisé en ce que** la ou chacune des deuxièmes facettes inclinées (14, 18 ; 314, 318) est située en face, respectivement, de la ou spécifiquement d'une des premières facettes inclinées (12, 16 ; 312, 316), suivant une direction perpendiculaire à l'axe optique (10 ; 310), formant, respectivement, une ou plusieurs paires de première et deuxième facettes.

3. Elément optique (8 ; 108 ; 208 ; 308) selon l'une des revendications 1 à 2, **caractérisé en ce que** la portion de sortie (8² ; 108² ; 208²; 308²) comprend un profil formant deux surfaces inférieure (9² ; 109² ; 209² ; 309²) et supérieure (9¹ ; 109¹ ; 209¹ ; 309¹) concourantes en un bord avant (9³ ; 109³ ; 209³ ; 309³) de l'élément, la ou au moins une des premières facettes (12 ; 312) étant sur une (9¹ ; 309¹) desdites surfaces et la ou au moins une des deuxièmes facettes (14 ; 314) étant sur l'autre (9² ; 309²) desdites surfaces.

4. Elément optique (8 ; 108 ; 208 ; 308) selon l'une des revendications 1 à 3, **caractérisé en ce que** la portion de sortie (8² ; 108² ; 208²; 308²) comprend plusieurs premières facettes inclinées (12, 16 ; 312, 316) et plusieurs deuxièmes facettes inclinées (14, 18 ; 314, 318), chacune desdites deuxièmes facettes (14, 18 ; 314, 318) étant positionnée de manière à réfléchir les rayons lumineux provenant spécifiquement d'une des premières facettes (12, 16 ; 312, 316).

5. Elément optique (8 ; 108 ; 208 ; 308) selon les revendications 3 et 4, **caractérisé en ce que** l'une des deux surfaces concourantes (9¹, 9² ; 109¹, 109² ; 209¹, 209² ; 309¹, 309²) comprend en outre au moins une des deuxièmes facettes (18 ; 318) et l'autre desdites surfaces comprend au moins une des premières facettes (16 ; 316).

6. Elément optique (8 ; 108 ; 208 ; 308) selon l'une des revendications 1 à 5, **caractérisé en ce que** la portion de sortie (8² ; 108² ; 208²; 308²) comprend également au moins une facette transversales (20 ; 320) à l'axe optique (10 ; 310) aptes à transmettre des rayons lumineux provenant directement de la portion d'entrée (8¹ ; 108¹ ; 208¹; 308¹) et des rayons lumineux réfléchis par la ou les deuxièmes facettes inclinées (14, 18 ; 314, 318).

7. Elément optique (8 ; 108 ; 208 ; 308) selon la revendication 6, **caractérisé en ce que** la ou les facettes transversales (20 ; 320) de la portion de sortie (8² ; 108² ; 208²; 308²) forment un angle avec l'axe optique (10 ; 310) qui est compris entre 75° et 105°, préférentiellement entre 80° et 100°, plus préférentiellement entre 85° et 95°, notamment sensiblement égal à 90°.

8. Elément optique (8 ; 108 ; 208 ; 310) selon l'une des revendications 6 et 7 en combinaison avec la revendication 3, **caractérisé en ce que** les surfaces inférieure et supérieure concourantes (9¹, 9² ; 109¹, 109² ; 209¹, 209² ; 309¹, 309²) comportent chacune la ou au moins une des facettes transversales (20 ; 320).

9. Elément optique (8 ; 108 ; 208 ; 308) selon la revendication 8, **caractérisé en ce que** les surfaces inférieure et supérieure concourantes (9¹, 9² ; 109¹, 109² ; 209¹, 209² ; 309¹, 309²) comportent chacune une facette longitudinale (22 ; 322).

10. Elément optique selon les revendications 3 et 9, **caractérisé en ce que** la portion de sortie (8² ; 108² ; 208²; 308²) est formée par une suite de motifs élémentaires de sortie le long de l'axe optique (10 ; 110 ; 210 ; 310), chaque motif élémentaire étant formé, au niveau de la surface inférieure concourante (9² ; 109² ; 209² ; 309²), par la succession d'une première facette inclinée (16 ; 316) d'une première paire (16, 18 ; 316, 318), d'une facette longitudinale (22 ; 322), d'une deuxième facette inclinée (14 ; 314) d'une deuxième paire (12, 14 ; 312, 314) et d'une facette transversale (20 ; 320) et, au niveau de la surface supérieure (9¹ ; 109¹ ; 209¹ ; 309¹), par la succession de la deuxième facette inclinée (18 ; 318) de la première paire (16, 18 ; 316, 318), d'une facette longitudinale (22 ; 322), d'une facette transversale (20 ; 320) et de la première facette inclinée (12 ; 312) de la deuxième paire (12, 14 ; 312, 314).

11. Elément optique (8 ; 108 ; 208 ; 308) selon l'une des revendications 1 à 10, **caractérisé en ce que** les première(s) et deuxième(s) facettes inclinées (12, 16 ; 14, 18 ; 312, 316 ; 314, 318) sont allongées perpendiculairement à l'axe optique (10 ; 310).

12. Elément optique (8; 108; 208; 308) selon les revendications 3 et 11, **caractérisé en ce que** les première(s) et deuxième(s) facettes inclinées (12, 16 ; 14, 18; 312, 316 ; 314, 318) forment des rainures transversales sur les deux surfaces concourantes (9¹, 9² ; 109¹, 109² ; 209¹, 209² ; 309¹, 309²) de la portion de sortie (8² ; 108² ; 208²).

13. Module optique (2 ; 102 ; 202 ; 302) comprenant :
- une première source de lumière (303) apte à émettre des rayons lumineux ; et
- un élément optique (8 ; 108 ; 208 ; 308) disposé de sorte à pouvoir recevoir des rayons lumineux émis par la source de lumière;
**caractérisé en ce que**
l'élément optique (8 ; 108 ; 208 ; 308) est conforme à l'une des revendications 1 à 12.

14. Module optique selon la revendication 13, **caractérisé en ce que** le module optique (2 ; 102 ; 202 ; 302) comporte un organe optique (4, 6 ; 104 ; 204 ; 304) avec une face d'entrée (4¹ ; 6¹ ; 104¹ ; 204¹ ; 304¹) et une face de sortie (4², 6² ; 104² ; 204²; 304²), l'élément optique (8 ; 108 ; 208 ; 308) étant disposé devant ladite face de sortie de l'organe optique et étant apte à propager des rayons lumineux émis par la première source de lumière (303) de la face d'entrée (4¹ ; 6¹ ; 104¹ ; 204¹ ; 304¹) vers la face de sortie (4², 6² ; 104² ; 204²; 304²).

15. Module optique (2) selon la revendication 14, **caractérisé en ce que** l'organe optique est un premier organe optique (4) disposé pour éclairer une partie seulement de la portion d'entrée (8¹) de l'élément optique (8), ledit module (2) comprenant une deuxième source de lumière et un deuxième organe optique (6), préférentiellement superposé au premier organe optique (4), disposé pour éclairer une autre partie seulement de la portion d'entrée de l'élément optique.
